# EUROPEAN PATENT SPECIFICATION

(11) **EP 0 649 985 B1**
(45) Date of publication and mention of the grant of the patent: **09.04.1997**
(21) Application number: 94305328.0
(22) Date of filing: 20.07.1994
(51) Int. Cl.: F03G 7/05, F01K 25/06, F01K 25/08

(54) **Thermal power generator**
Thermischer Kraftgenerator
Générateur d'énergie thermique

(30) Priority: 22.09.1993 JP 236432/93
(43) Date of publication of application: 26.04.1995
(73) Proprietor: SAGA UNIVERSITY, Saga-City Saga Pref. (JP)
(72) Inventor: Uehara, Haruo, Saga City, Saga Pref. (JP); Ikegami, Yasuyuki, Saga City, Saga Pref. (JP)
(74) Representative: Senior, Alan Murray

(56) References cited:
- EP-A- 0 162 579
- EP-A- 0 181 275
- WO-A-91/07573

## Description

The present invention relates to a thermal power generator for generating electric power by utilizing a high heat source and a low heat source, and in particular improves an electric power generating effect by providing evaporator, vapor-liquid separator, absorber and regenerator, increases thermal efficiency of evaporator and condenser, and reduces costs of constructing the apparatus.

An oceanic thermal power generator of the kind for obtaining electric power by utilizing a temperature difference between warm sea water at high temperature in an oceanic surface layer and cold sea water at low temperature in an oceanic deep layer has hitherto been constructed as each one of an evaporator, a turbine connected to a generator and a condenser as a main apparatus. These features are disclosed in Japanese Patent Application Publication No. 1989/90, which is directed to an oceanic thermal power generator and on which the preamble of appendant claim 1 is based. Japanese Patent Application Publication No. 1990/90, which is directed to a control device in oceanic thermal power generation, also discloses these features.

In the case of circulating warm sea water through an evaporator, circulating cold sea water through a condenser, evaporating a working fluid by the temperature difference between both and condensing, and driving a turbine in this period and generating power, the warm sea water circulated through the evaporator is extracted from a surface layer of the ocean having a high temperature, such as 15-33°C, and plankton, spawn and dirt floating therein adhere to a heat transfer surface of the main apparatus and the thermal conductivity efficiency is disadvantageously lowered. As general methods of preventing stains for removing such disadvantage, there are methods of preventing planktonic stains by injecting chlorine into circulating sea water, or providing an electrode in circulated sea water and generating chloride by electrolysis, and there is a method of preventing any other stains by circulating sponge balls, brushes and the like with circulated sea water through the main apparatus. However, the thermal exchange temperature difference is small in oceanic thermal power generation, such that the amount of circulated sea water becomes enormous, and as a result, with such general methods of preventing stains there are problems such as high cost, environmental pollution and the like. For example, the method of using sponge balls, brushes and the like requires many sponge ball and/or brushes and results in lowering of net output by increasing consumed power due to the increase in circulated resistance, and further results in an increase of the cost of equipment and an increase of a power generation unit cost.

Therefore, a prior oceanic thermal power generator is not always susceptible to a known method of preventing stains and is disadvantageously high in cost.

In the known oceanic thermal power generator there has been used a ranking cycle or regenerating cycle by utilizing the so-called single component medium having high purity such as ammonia, flon, water and the like as a working fluid. "Flon" is an unregistered trademark which has been used in Japan for a substance which corresponds to "freon".

In the known ranking cycle, thermal efficiency is small, so that the areas of an evaporator and a condenser become enormous, and generating cost becomes expensive. In order to eliminate this disadvantage, a cycle by utilising a mixture of ammonia and water as a working fluid has been proposed. This is called "calina cycle". In this calina cycle, thermal efficiency becomes high as compared with the conventional ranking cycle, but thermal efficiencies of an evaporator and a condenser are lowered, so that there is a disadvantage of cancelling the increased thermal efficiency with the saving cost. Moreover, the whole amount of mixed vapor is passed through a condenser, an area of the condenser becomes larger than the ranking cycle, a flow rate of the low heat source increases, a cost for constructing a generator becomes high, and power for sending a low heat source and a high heat source becomes large, so that this cycle is not economically advisable.

An object of the present invention is to obviate the above-described conventional shortcomings and to provide a thermal power generator with improves power generation efficiency, reduces equipment cost, and/or reduces electric power for pumping up a high heat source and a low heat source.

EP-A-0,181,275 discloses a thermal power generator comprising: an evaporator for heat-exchanging between a high heat source fluid and a working fluid for heating the working fluid when cold; a generating system for generating power from said heated working fluid and comprising one or more stages; a condenser for heat-exchanging between a low heat source fluid and said working fluid to cool the heated working fluid; a liquid-vapour separator for separating the working fluid heated at the evaporator into vaporised working fluid and liquid working fluid, the separated vaporised working fluid being supplied to the generating system and a regenerator supplied with the separated liquid working fluid for heat-exchanging it with cold working fluid.

According to the present invention, there is provided a thermal power generator comprising: an evaporator for heat-exchanging between a high heat source fluid and a working fluid for heating the working fluid when cold; a generating system for generating power from said heated working fluid and comprising one or more stages; a condenser for heat-exchanging between a low heat source fluid and said working fluid to cool the heated working fluid; a liquid-vapour separator for separating the working fluid heated at the evaporator into vaporised working fluid and liquid working fluid, the separated vaporised working fluid being supplied to the generating system; and a regenerator supplied with the separated liquid working fluid for heat-exchanging it with cold working fluid, and characterised in that: said thermal power generator further comprises an absorber supplied with working fluid from the regenerator and the working fluid discharged from the generating system for mixing the working fluids, the vapour discharged from the absorber being supplied to the condenser; and said first-mentioned condenser is a main condenser and the thermal power generator further comprises an auxiliary condenser supplied with working fluid from the main condenser and liquid working fluid discharged from the absorber for heat-exchanging the working fluid with the low heat source fluid.

Preferably, the generating system comprises at least two successive stages and said fluid supplied to absorber from the generating system is working fluid discharged from the final stage of the generating system. The or each stage of said generating system may include a turbine driven by the working fluid and connected to a generator.

Desirably, the generator further comprises a heater supplied with part of the working fluid discharged from the first stage of the generating system for heat-exchanging it with the cold working fluid, in which case there may also be a tank for temporarily storing the working fluid discharged from said first stage of the generating system for supply from the heater to the condenser, and a working fluid pump for supplying the working fluid to the main condenser.

Advantageously, said working fluid is supplied from the regenerator to the absorber through a reducing valve.

Preferably, a storage tank for storing a cold working fluid supplied from said condenser or condensers and a pipe line having a pump for supplying cold working fluid from said storage tank.

Preferably, the generator further comprises the condenser or condensers are condensation tanks.

A thermal power generator mentioned in the present invention is a power generating system which may use as a high heat source a warm sea water at high temperature in an oceanic device, hot spring water, subterranean heat water and/or steam pumped from underground, warm drain, steam and warm water gas discharged from a thermal-power station and an atomic power station, warm drain and warm exhaust gas of a refuse incinerator and a sewage disposal plant, and a cooling water of an atomic reactor, and as a low heat source a cool sea water at low temperature in a deep layer of the ocean, water cooled at a cooling tower, water of an oceanic surface layer, river water, ground water, LNG, LPG and the like.

The present invention plans economical thermal power generation by improving power generation efficiency of such thermal power generator, improving thermal efficiencies of an evaporator and a condenser, and reducing cost for constructing an apparatus.

For a better understanding of the invention, reference is made to the accompanying drawings, in which;

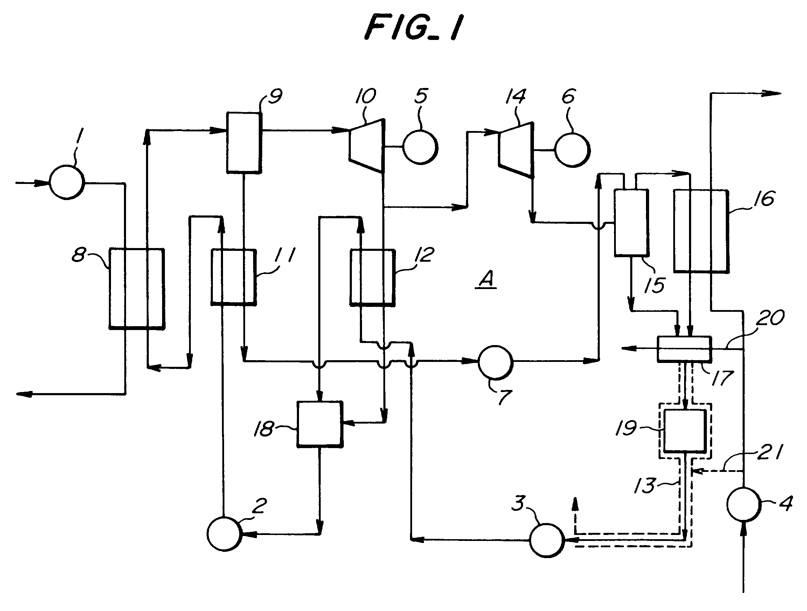

Fig. 1 is a block diagram showing one example of the construction for carrying out the present invention.

1 is a high heat source pump, 2 and 3 are working fluid pumps, 4 is a low heat source pump, 5 and 6 are generators, 7 is a reducing valve, 8 is an evaporator, 9 is a separator, 10 and 14 are turbines, 11 is a regenerator, 12 is a heater, 13 is a heat seal jacket, 15 is an absorber, 16 is a main condenser, 17 is an auxiliary condensation tank, 18 is a tank, 19 is a storage tank, 20 and 21 are branches.

An embodiment of the present invention will be explained by referring to the accompanying drawings in detail as follows.

A thermal power generator having a construction shown in Fig. 1 comprises: a high heat source pump 1; an evaporator 8 connected to said high heat source pump 1 and a cold working fluid pump 2 for evaporating a cold working fluid; a separator 9 connected to said evaporator 8, a regenerator 11 and turbine 10 for separating into a vapor and a liquid; the regenerator 11 being connected to the separator 9 and the cold working fluid pump 2; a first stage turbine 10 connected to the separator 9 with a generator 5, a heater 12 and a second stage turbine 14; a heater 12 connected to the first turbine 10 and a cold working fluid pump 3 for heat exchanging cold working fluid and the output of the first stage turbine 10; a second turbine 14 connected to the first turbine 10 with a generator 6, an absorber 15 connected to said second stage turbine 14; a main condenser 16, an auxiliary condenser tank 17 and a reducing pressure valve 7; a high heat source pump 1 connected to said evaporator; a lower heat source pump 4 connected to said main condenser 16; and working fluid pumps 2 and 3 which are communicated and connected through piping and valve.

The present invention is described in more detail. An evaporator 8 is connected to a high heat source pump 1, a high heat source fluid supplied from the high heat source pump 1 is heat-exchanged with a cold-working fluid sent from a low heat source working pump 2 so as to make the working fluid a vapor-liquid mixture, and the mixture is sent to a separator 9 connected to the evaporator 8 and separated into vapor and liquid, the separated vapor is sent to a turbine 10, and power is generated by rotating the turbine 10 and a generator 5 connected thereto. The vapor discharged from the first stage turbine 10 is of high temperature and high pressure, so that it is sent to a next stage turbine 14 and to generate power by rotating a generator 6 connected to the turbine 14. On the other hand, the liquid obtained by vapor-liquid separating in the separator 9 is still at high temperature, so that it is sent to a regenerator 11, heat-exchanged a cold-working fluid sent from a working fluid pump 2 at the regenerator 11, and the warmed working fluid is sent to the evaporator 8 and heat-exchanged with a high heat source fluid sent from the high heat source pump 1. Moreover, piping is arranged in such a manner that a part of the vapor discharged from the first stage turbine 10 is branched, guided to a heater 12, and heat-exchanged with a cold-working fluid sent from a working fluid pump 3, cold water cooled by heat-exchange and condensed in the heater 12 and a working fluid warmed by heat-exchange are stored in a tank 18, and the stored fluid is sent to the regenerator 11 by the working fluid pump 2 connected to the tank 18.

The vapor discharged from the final stage turbine 14 is guided to the absorber 15, mixed (absorbed) with the fluid sent from the regenerator 11 via the reducing pressure valve 7, and the absorbed liquid is sent to the auxiliary condensation tank 17, further condensed to low temperature, sent to the fluid storage tank 19 of the low heat source, and the low heat source fluid is sent to the heater 12 by the working fluid pump 3 connected to the storage tank 19 and heat-exchanged. The vapor discharged from the absorber 15 is sent to the main condenser 16 and heat-exchanged with the low heat source fluid sent from the low heat source pump 4, the resulting liquid is sent to the auxiliary condensation tank 17, the low heat source fluid sent from the low heat source pump 4 is branched by a branch 20, guided to the auxiliary condensation tank 17, and heat-exchanged here, and the cooled working fluid is stored in the storage tank 19. Piping is arranged to send the cold working fluid to the heater 12 by the working fluid pump 3 connected to the tank 19. Reference numeral 13 shows a heat seal jacket provided in the piping system around said fluid storage tank 19. Reference numerals 20, 21 show branches for branching the piping system from the cold heat source pump 4 to the main condenser 16.

In case of carrying out the present invention, it is further effective to provide not single but a plurality of evaporators 8 and main condensers 16. Moreover, it is effective to provide two sets or a plural set of turbines 10, 14 and heaters 12 in addition to those in the illustrated embodiment.

In the illustrated embodiment, the working fluid used is a working fluid consisting of a mixture of 2 to 3 components having different boiling points, and this working fluid is sent to a regenerator 11 by a working fluid pump 2 from a tank 18. The cold working fluid is heated by a mixed liquid separated by a separator 9 in the regenerator 11, thereafter heated in an evaporator 8 by a high temperature fluid sent by a high heat source pump 1, boiled and evaporated. With such a structure, some foams are generated in the regenerator 11 for increasing thermal conductivity efficiency of an evaporator 8. In this case, temperature and pressure of the mixture become increased with heating within the evaporator 8. The working fluid of the mixture reaches a separator 9 in the admixed condition of a vapor portion and a liquid portion.

As a preferable example of the working fluid, mention may be made of some water added to ammonia and some flon 32 to flon 134a. Moreover, under the condition of a high heat source and a low heat source, it is sometimes effective to add some flon 32 and flon 123 to flon 134a, respectively. Furthermore, it is practically possible to combine hydrocarbon compounds having different boiling points.

In the embodiment of the present invention, ammonia and flon 134a are called material A, and water and flon 32 are called material B.

In the separator 9, the mixed vapor containing many components of material A is separated from the mixed liquid containing many component of material A. The mixed vapor containing many components of material A reaches a turbine 10, expands by passing therethrough, drives the turbine, and thereafter rotates a generator 5 for generating power. The mixed vapor exited from the turbine 10 is separated into the one passed through a turbine 14 and the other passed through a heater 12 at the exit. This separating ratio is determined according to a theory for maximizing power generator efficiency. By separating the vapor into a suitable ratio, an amount of the mixed vapor transmitted to a main condenser 16 can more considerably be reduced than a ranking cycle and a calina cycle. It is thereafter possible to reduce a heat transfer area of the main condenser 16 and an amount of cooling source for cooling.

The mixed vapor reached the turbine 14 rotates a generator 6 for generating power and thereafter passes through the turbine 14 and reaches an absorber 15.

On the other hand, the mixed liquid separated by the separator 9 heats a low temperature mixed liquid sent from a tank 18 by a pump 2 at a regenerator 11, is reduced to an appropriate pressure by a reducing valve 7, and sent to an absorber 15. The mixed liquid is mixed with the mixed vapor passed through the turbine 14 and absorbed. There, the mixed vapor, which is highly concentrated again, reaches the main condenser 16, and becomes a mixed liquid condensed by the low heat source fluid sent by the cold heat source pump 4.

Some of the mixed liquid remained in the absorber 15 is sent to an auxiliary condenser 17 and further cooled. A mixed liquid condensed in the main condenser 16 and non-condensed mixed vapor reach an auxiliary condenser 17 and completely condensed there, then reach a tank 19 and are stored there.

The mixed liquid stored in the tank 19 is sent to a heater 12 by a pump 3. There, part of the mixed vapor exited from the turbine 10 is condensed and thereafter sent to a tank 18. On the other hand, the mixed vapor condensed by the heater 12 becomes a mixed liquid and reached the tank 18.

The mixed liquid becomes a mixed liquid of the original concentration in the tank 18 and is sent to a regenerator 11 by a pump 2. The device of the present invention repeats such heating and cooling, circulates a fluid to improve and economically establishes power generation efficiency.

According to the present invention, when a low heat source fluid sent by a pump 4 is passed through an auxiliary condensation tank 17 and a seal jacket 13 of a tank 19 through connecting tubes 20, 21, heat is prevented from entering from the outside and a working fluid is prevented from re-evaporation.

An example of mixed fluids according to the present invention is mentioned as follows.
(1) Ammonia : water = 90:10 - 80:20
(2) Flon 13A : flon 32 = 80 : 20 - 90:10
The above mixing ratios are preferable.

As apparent from the above explanation, according to the present invention, in a thermal power generator, there is provided two-stage type or two or a plurality of turbines, and there is added each one of separator 9, regenerator 11 and absorber 15, and further added one or a plurality of heaters 12, so that thermal energy held in a high heat source and a low heat source is converted into electrical energy with higher efficiency, a heat transfer area of a condenser 16 and a flow rate of a low heat source are reduced, and thermal efficiency of an evaporator 8 is increased, which are industrially remarkable effects.

## Claims

1. A thermal power generator comprising:
an evaporator (8) for heat-exchanging between a high heat source fluid and a working fluid for heating the working fluid when cold;
a generating system for generating power from said heated working fluid and comprising one or more stages;
a condenser (16) for heat-exchanging between a low heat source fluid and said working fluid to cool the heated working fluid;
(9) a liquid-vapour separator (9) for separating the working fluid heated at the evaporator (8) into vaporised working fluid and liquid working fluid, the separated vaporised working fluid being supplied to the generating system; and
a regenerator (11) supplied with the separated liquid working fluid for heat-exchanging it with cold working fluid, and
characterised in that:
said thermal power generator further comprises an absorber (15) supplied with working fluid from the regenerator (11) and the working fluid discharged from the generating system for mixing the working fluids, the vapour discharged from the absorber (15) being supplied to the condenser (16); and
said first-mentioned condenser (16) is a main condenser and the thermal power generator further comprises an auxiliary condenser (17) supplied with working fluid from the main condenser (16) and liquid working fluid discharged from the absorber (15) for heat-exchanging the working fluid with the low heat source fluid.

2. A thermal power generator according to claim 1, wherein the generating system comprises at least two successive stages and said fluid supplied to absorber (15) from the generating system is working fluid discharged from the final stage of the generating system.

3. A thermal power generator according to claim 2, further comprising a heater (12) supplied with part of the working fluid discharged from the first stage of the generating system for heat-exchanging it with the cold working fluid.

4. A thermal power generator according to claim 3, further comprising a tank (18) for temporarily storing the working fluid discharged from said first stage of the generating system for supply from the heater (12) to the condenser (16), and a working fluid pump (2) for supplying the working fluid to the main condenser (16).

5. A thermal power generator according to any one of the preceding claims, wherein the or each stage of said generating system includes a turbine (10,14) driven by the working fluid and connected to a generator (5,6).

6. A thermal power generator according to any one of the preceding claims, wherein said working fluid is supplied from the regenerator (11) to the absorber (15) through a reducing valve (7).

7. A thermal power generator according to any one of the preceding claims, further comprising a storage tank (19) for storing a cold working fluid supplied from said condenser (16) or condensers (16,17) and a pipe line having a pump (3) for supplying cold working fluid from said storage tank (19).

8. A thermal power generator according to any one of the preceding claims, wherein the condenser (16) or condensers (16,17) are condensation tanks.

9. A thermal power generator according to any one of the preceding claims, wherein the working fluid includes at least one of water, ammonia and flon.

## Patentansprüche

1. Wärmekraftmaschine, aufweisend:
einen Verdampfer (8) zum Austauschen von Wärme zwischen einem Medium aus einer Quelle höher Wärme und einem Arbeitsmedium, um das Arbeitsmedium zu erwärmen, wenn es kalt ist;
ein Erzeugungssystem zum Erzeugen von Energie aus dem erwärmten Arbeitsmedium, welches Erzeugungssystem eine oder mehr Stufen aufweist;
einen Kondensor (16) zum Austauschen von Wärme zwischen einem Medium aus einer Quelle niedriger Wärme und dem Arbeitsmedium, um das erwärmte Arbeitsmedlum zu kühlen;
einen Flüssigkeit-Dampf-Separator (9) zum Trennen des beim Verdampfer (8) erwärmten Arbeitsmediums in ein dampfförmiges Arbeitsmedium und in ein flüssiges Arbeitsmedium, wobei das abgetrennte dampfförmige Arbeitsmedium dem Erzeugungssystem zugeführt wird; und
einen Regenerator (11), dem das abgetrennte flüssige Arbeitsmedlum zum Austauschen von Wärme zwischen ihm und einem kalten Arbeitsmedium zugeführt wird,
dadurch gekennzeichnet, daß:
die Wärmekraftmaschine des weiteren einen Absorber (15) aufweist, dem ein Arbeitsmedium vom Regenerator (11) und das vom Erzeugungssystem abgegebene Arbeitsmedium zum Mischen der Arbeitsmedien zugeführt wird, wobei der vom Absorber (15) abgegebene Dampf dem Kondensor (16) zugeführt wird; und
der vorgenannte Kondensor (16) ein Hauptkondensor ist und die Wärmekraftmaschine des weiteren einen zusätzlichen Kondensor (17) aufweist, dem ein Arbeitsmedium vom Hauptkondensor (16) und ein flüssiges, vom Absorber (15) abgegebenes Arbeitsmedium zum Austauschen von Wärme zwischen dem Arbeitsmedium und dem Medium aus der Quelle niedriger Wärme zugeführt wird.

2. Wärmekraftmaschine nach Anspruch 1, wobei das Erzeugungssystem mindestens zwei aufeinanderfolgende Stufen aufweist und das dem Absorber (15) vom Erzeugungssystem zugeführte Medium ein von der letzten Stufe des Erzeugungssystems abgegebenes Arbeitsmedium ist.

3. Wärmekraftmaschine nach Anspruch 2, des weiteren aufweisend einen Erhitzer (12), dem ein Teil des von der ersten Stufe des Erzeugungssystems abgegebenen Arbeitsmediums zum Austauschen von Wärme zwischen ihm und dem kalten Arbeitsmedium zugeführt wird.

4. Wärmekraftmaschine nach Anspruch 3, des weiteren aufweisend einen Behälter (18) zum zeitweiligen Aufbewahren des von der ersten Stufe des Erzeugungssystems abgegebenen Arbeitsmediums zum Zuführen vom Erhitzer (12) zum Kondensor (16) und eine Arbeitsmediumpumpe (2) zum Zuführen des Arbeitsmediums zum Hauptkondensor (16).

5. Wärmekraftmaschine nach einem der vorangehenden Ansprüche, wobei die oder jede Stufe des Erzeugungssystems eine Turbine (10, 14) enthält, die vom Arbeitsmedium angetrieben wird und mit einem Generator (5, 6) verbunden ist.

6. Wärmekraftmaschine nach einem der vorangehenden Ansprüche, wobei das Arbeitsmedium vom Regenerator (11) dem Absorber (15) durch ein Reduzierventil (7) zugeführt wird.

7. Wärmekraftmaschine nach einem der vorangehenden Ansprüche, des weiteren aufweisend einen Aufbewahrungsbehälter (19) zum Aufbewahren eines kalten Arbeitsmediums, das vom Kondensor (16) oder von den Kondensoren (16, 17) zugeführt wird, und eine Rohrleitung mit einer Pumpe (3) zum Zuführen eines kalten Arbeitsmediums aus dem Aufbewahrungsbehälter (19).

8. Wärmekraftmaschine nach einem der vorangehenden Ansprüche, wobei der Kondensor (16) oder die Kondensoren (16, 17) Kondensationsbehälter sind.

9. Wärmekraftmaschine nach einem der vorangehenden Ansprüche, wobei das Arbeitsmedium mindestens Wasser und/oder Ammoniak und/oder Flon (Freon) enthält.

## Revendications

1. Générateur d'énergie thermique comportant :
un évaporateur (8) pour échanger de la chaleur entre un fluide formant source de chaleur élevée et un fluide actif, pour chauffer le fluide actif lorsqu'il est froid ;
un système de production pour produire de l'énergie à partir dudit fluide actif chauffé et comportant un ou plusieurs étages ;
un condenseur (16) pour échanger de la chaleur entre un fluide formant source de chaleur faible et ledit fluide actif pour refroidir le fluide actif chauffé ;
un séparateur liquide-vapeur (9) destiné à séparer le fluide actif chauffé au niveau de l'évaporateur (8) en fluide actif mis en vapeur et fluide actif liquide, le fluide actif mis en vapeur séparé étant envoyé vers le système de production ; et
un régénérateur (11) alimenté en fluide actif liquide séparé pour échanger de la chaleur avec le fluide actif froid, et
caractérisé en ce que :
ledit générateur d'énergie thermique comporte de plus un absorbeur (15) alimenté en fluide actif provenant du régénérateur (il) et en fluide actif déchargé par le système de production pour mélanger les fluides actifs, la vapeur déchargée à partir de l'absorbeur (15) étant envoyée vers le condenseur (16) ; et
ledit condenseur mentionné en premier (16) est un condenseur principal et le générateur d'énergie thermique comporte de plus un condenseur auxiliaire (17) alimenté en fluide actif provenant du condenseur principal (16) et en fluide actif liquide déchargé à partir de l'absorbeur (15) pour échanger de la chaleur entre le fluide actif et le fluide formant source de chaleur faible.

2. Générateur d'énergie thermique selon la revendication 1, dans lequel le système de production comporte au moins deux étages successifs et ledit fluide envoyé vers l'absorbeur (15) à partir du système de production est le fluide actif déchargé à partir de l'étage final du système de production.

3. Générateur d'énergie thermique selon la revendication 2, comportant de plus un dispositif de chauffage (12) alimenté à l'aide d'une partie du fluide actif déchargé à partir du premier étage du système de production pour échanger de la chaleur entre celui-ci et le fluide actif froid.

4. Générateur d'énergie thermique selon la revendication 3, comportant de plus un réservoir (18) pour stocker temporairement le fluide actif déchargé à partir du premier étage du système de production pour l'envoyer à partir du dispositif de chauffage (12) vers le condenseur (16), et une pompe de fluide actif (2) pour envoyer le fluide actif vers le condenseur principal (16).

5. Générateur d'énergie thermique selon l'une quelconque des revendications précédentes, dans lequel l'étage ou chaque étage dudit système de production comporte une turbine (10, 14) entraînée par le fluide actif et reliée au générateur (5, 6).

6. Générateur d'énergie thermique selon l'une quelconque des revendications précédentes, dans lequel ledit fluide actif est envoyé à partir du régénérateur (11) vers l'absorbeur (15) par l'intermédiaire d'une vanne de réduction (7).

7. Générateur d'énergie thermique selon l'une quelconque des revendications précédentes, comportant de plus un réservoir de stockage (19) pour stocker un fluide actif froid alimenté par ledit condenseur (16) ou les condenseurs (16, 17) et une ligne de tuyauterie ayant une pompe (3) pour alimenter du fluide actif froid à partir dudit réservoir de stockage (19).

8. Générateur d'énergie thermique selon l'une quelconque des revendications précédentes, dans lequel le condenseur (16) ou les condenseurs (16, 17) sont des réservoirs de condensation.

9. Générateur d'énergie thermique selon l'une quelconque des revendications précédentes, dans lequel le fluide actif comporte au moins un élément parmi l'eau, l'ammoniaque et du Flon.
